# EUROPÄISCHE PATENTSCHRIFT

(11) **EP 1 944 248 B1**
(45) Veröffentlichungstag und Bekanntmachung des Hinweises auf die Patenterteilung: **13.12.2017**
(21) Anmeldenummer: 07100520.1
(22) Anmeldetag: 15.01.2007
(51) Int. Cl.: B65D 85/804, A47J 31/40, A47J 31/06

(54) **Kapsel, Mittel zum Penetrieren des Bodens einer Kapsel und Vorrichtung für die Zubereitung eines Getränks**
Capsule, means for penetrating the bottom of a capsule and device for preparing a drink
Capsule, moyen de pénétration du fond d'une capsule et dispositif de préparation d'une boisson

(43) Veröffentlichungstag der Anmeldung: 16.07.2008
(73) Patentinhaber: Swiss Caffe Asia Ltd., Hong Kong (HK)
(72) Erfinder: Aardenburg, Kees, 6900, Lugano (CH)
(74) Vertreter: Alagem Modiano, Lara S.

(56) Entgegenhaltungen:
- WO-A-2005/066040
- FR-A1- 2 617 389
- GB-A- 1 256 247
- US-A- 2 899 886
- US-A1- 2002 144 603

## Beschreibung

Die Erfindung betrifft eine Kapsel gemäss dem Oberbegriff von Anspruch 1. Derartige Kapseln werden heute verbreitet als Portionenpackungen für die Zubereitung von z.B. Kaffee verwendet. Der Verbraucher muss sich nicht mehr um die Dosierung der richtigen Kaffeemenge kümmern und nach dem Extraktionsvorgang wird die Kapsel samt Inhalt entsorgt.

Das Kaffeepulver bleibt ausserdem in der geschlossenen Kammer aromadicht verpackt und ist vor Feuchtigkeit geschützt.

GB1256247 offenbart eine Kartusche für den Einsatz in Getränkeautomaten, welche einen hohlen Körper und einen Deckel hat. Der Deckel wird hierbei unter äußerem Druck von einem Dorn durchbohrt, das eine Flüssigkeit in das Innere des Körpers leitet. Die Flüssigkeit mischt sich dann mit einer in dem Körper befindlichen Substanz und stellt so ein Getränk bereit. US2899886 offenbart einen Apparat zur Zubereitung eines Getränks mittels einer Kapsel. Die Kapselwände werden bei der Zubereitung von außerhalb der Kapsel befindlichen Schneiden durchstossen, um eine Flüssigkeit durch die Kapsel hindurchzuleiten und das Getränk zuzubereiten.

Vergleichbare Kapseln sind beispielsweise durch die EP 1 101 430 oder die EP 1 344 722 bekannt geworden. Ein Problem bei derartigen Kapseln ist die Penetration mit ausserhalb der Kapsel angeordneten Mitteln. Diese Mittel sind in der Regel einer Maschine für die Zubereitung eines Getränks zugeordnet, wobei die Kapsel nur noch in die Maschine eingelegt werden muss, wobei der Kraftaufwand für die Penetration der Kapsel manuell über ein Hebelgetriebe oder dergleichen erfolgt. Die Kapsel muss dabei ausreichend robust beschaffen sein, um den Inhalt vor Beschädigungen zu schützen und um keine Deformationen durch äussere Krafteinwirkungen zu erleiden. Es hat sich ausserdem gezeigt, dass es wesentlich vorteilhafter ist, die Kapsel an mehreren Stellen gleichzeitig zu perforieren, um eine optimale Benetzung des Kaffeepulvers und Durchleitung des Brühwassers zu erzielen. Diese Faktoren bewirken einen verhältnismässig grossen Kraftaufwand für die Penetration bzw. eine hohe Reissspannung im Material, bis es zur eigentlichen Penetration kommt. Damit verbunden sind Materialdehnungen an der Kapselwand, die eine saubere Penetration beeinträchtigen können.

Es ist daher eine Aufgabe der Erfindung, eine Kapsel der eingangs genannten Art zu schaffen, die in einer eigens dafür vorgesehenen Zone möglichst durch eine Vielzahl von Penetrationsmitteln penetrierbar ist, ohne dass es zu unerwünschten Deformationen am Boden der Kapsel kommt. Diese Aufgabe wird durch eine Kapsel gelöst, welche die Merkmale in Anspruch 1 aufweist. Die Substanz für die Zubereitung des Getränks liegt unmittelbar auf dem Boden der Kapsel auf, ist also nicht durch zusätzliche Filterschichten abgegrenzt, welche eine Penetration zusätzlich erschweren können..Der Boden der Kapsel weist eine kreisringsförmige Rinne auf, deren innere Wandpartie eine hohle, vorzugsweise sich gegen den Deckel verjüngende, vorzugsweise kegelstumpfförmige Versteifungszone bildet. Diese Versteifungszone verhindert, dass sich der Kapselboden beim Aufbau der Reissspannung unmittelbar vor der Penetration unzulässig durchbiegen kann. Die erforderliche Reissspannung baut sich somit schlagartig auf, womit eine saubere Penetration des Kapselbodens an der penetrierbaren Zone am Boden der Rinne erzielt wird. Erfindungsgemäß lässt sich das Verhältnis zwischen Penetrationszone und Versteifungszone optimal gestalten, indem die Wandstärke des Bodens im Bereich der penetrierbaren Zone geringer ist als an der inneren und/oder an der äusseren Wandpartie der kreisringförmigen Rinne. Eine kegelstumpfförmige Versteifungszone hat sich aus fabrikationstechnischen und aus festigkeitsmässigen Gründen als vorteilhaft erwiesen. Selbstverständlich könnte diese Versteifungszone je nach Ausgestaltung der inneren Wandpartie auch eine andere Konfiguration aufweisen. Die Höhe der inneren Wandpartie bezogen auf die Längsmittelachse der Kapsel kann kleiner sein als der mittlere Durchmesser der inneren Wandpartie, womit ein ausreichendes Verhältnis zwischen Höhe und Durchmesser der Wandpartie erzielt wird.

Ein weiterer Vorteil der kreisringsförmigen Rinne mit dem penetrierbaren Bodenbereich besteht darin, dass sich beim Durchleiten des Brühwassers vom Deckel gegen den Boden bei entsprechendem Einpressdruck die Flüssigkeit zuerst in der Rinne aufstaut. Unmittelbar vor der Ableitung des Extrakts durch die perforierten Stellen findet dabei eine Art Vorextraktion in der Rinne statt.

Die äussere Wandpartie der Rinne kann sich gegen den Deckel ebenfalls vorzugsweise kegelstumpfförmig erweitern und direkt in die Seitenwand der Kapsel übergehen. Es ist aber auch denkbar, dass sich die äussere Wandpartie der Rinne gegen den Deckel vorzugsweise kegelstumpfförmig erweitert und dass sie mit einem Absatz oder mit einem Radius in die Seitenwand übergeht. Mit diesem Absatz oder Radius wird auch auf der Aussenseite der kreisringförmigen Penetrationszone eine Materialversteifung bewirkt, welche die Penetration begünstigt. Es kann dabei zweckmässig sein, wenn die innere Wandpartie der Rinne bis in die Ebene des Absatzes bzw. des Radiusansatzes zwischen der äusseren Wandpartie und der Seitenwand reicht.

Weitere Vorteile können erreicht werden, wenn die innere Wandpartie an ihrem deckelseitigen Ende in einen zentralen Bodenabschnitt übergeht, der parallel zum Boden der Rinne verläuft. Der zentrale Bodenabschnitt kann dabei in der Ebene des Absatzes oder des Radiusansatzes zwischen der äusseren Wandpartie und der Seitenwand verlaufen.

Die innere Wandpartie kann an ihrem deckelseitigen Ende aber auch in einen konkav nach innen gewölbten zentralen Bodenabschnitt übergehen. Damit wird ein kuppelartiger Effekt erzielt, der die innere Wandpartie der Rinne besonders vorteilhaft versteift. Ebenso gut kann die innere Wandpartie aber an ihrem deckelseitigen Ende in einen konvex nach aussen gewölbten zentralen Bodenabschnitt übergehen. Damit wird der gleiche Effekt erzielt, wie mit der konkaven Wölbung. Der zentrale Bodenabschnitt kann ausserdem derart flexibel ausgestaltet sein, dass er durch eine Kraft von aussen konkav nach innen stülpbar ist. Dadurch könnte beispielsweise eine Reduktion des Kapselvolumens und damit eine Verdichtung der darin befindlichen Substanz erzielt werden. Auch ein geringer Überdruck liesse sich mit einer derartigen Bodendeformation erzielen, was die Perforation weiter begünstigen könnte.

Die Erfindung betrifft auch ein Mittel gemäß Auspruch 11 zum Penetrieren des Bodens einer Kapsel nach Auspruch 1 oder den abhängigen Ausprüchen 2 bis 10, mit einer Bodenplatte, die eine kreisringförmige Penetrationszone aufweist, auf der mehrere Penetrationselemente angeordnet sind, wobei im Zentrum der Penetrationszone hohle, eine vorzugsweise kegelstumpfförmige Erhöhung angeordnet ist. Diese zentrale Erhöhung dringt in die zentrale Bodenaussparung an der Kapsel ein und bewirkt dadurch ein Zentrieren der Kapsel während der Penetration.

Die Penetrationszone bildet vorzugsweise ebenfalls eine kreisringförmige Wanne, welche mit der kreisringförmigen Rinne der Kapsel korrespondiert.

Die Penetrationselemente können sich zu einer Spitze oder zu einer Schneide verjüngende Körper mit einem Ablaufkanal bilden, der sich durch die Bodenplatte erstreckt und der sich gegen eine Seitenfläche des Körpers öffnet. Ersichtlicherweise dienen derartige Penetrationselemente nicht nur der eigentlichen Penetration der Kapsel, sondern auch unmittelbar der Ableitung der Flüssigkeit. Die Öffnungen in den Seitenflächen der Körper können dabei mit einer Siebfolie bedeckt sein. Die Filter- oder Siebwirkung beim Ableiten der Flüssigkeit wird dabei unmittelbar an den Penetrationselementen erzielt. Die Siebfolie kann mit derart feinen Öffnungen versehen sein, dass selbst feinste Festpartikel zurückgehalten werden. Anstelle der Siebfolie wäre es aber auch denkbar, die Penetrationselemente mit einer Mehrzahl von sehr feinen Bohrungen zu versehen, welche von aussen in den Ablaufkanal führen.

Die Öffnungen des Ablaufkanals können jeweils in einer Seitenfläche der Körper angeordnet sein, welche der zentralen Erhöhung zugewandt ist. Damit wird beim Extraktionsvorgang in der Kapsel eine Strömung erzwungen, die vom Zentrum nach aussen gegen die Penetrationselemente verläuft.

Die Penetrationselemente können dabei etwa gleich hoch sein wie die vorzugsweise kegelstumpfförmige Erhöhung im Zentrum. Auf der vorzugsweise kegelstumpfförmigen Erhöhung kann ausserdem eine Schraubendruckfeder angeordnet sein, deren freies Ende an den Boden einer gegen die Bodenplatte pressbaren Kapsel anlegbar ist. Diese Schraubendruckfeder bewirkt eine von der Bodenplatte weggerichtete Kraft, welche das Ablösen der Kapsel von der Bodenplatte bzw. von den Penetrationselementen erleichtert. Ersichtlicherweise dient die zentrale Erhöhung am Kapselboden unter anderem auch der Zentrierung dieser Schraubendruckfeder.

Schliesslich betrifft die Erfindung auch eine Vorrichtung für die Zubereitung eines Getränks mit den Merkmalen im Anspruch 18. Diese Vorrichtung ermöglicht eine simultane Penetration der Kapsel am Deckel und am Boden, wobei das Öffnen und Schliessen der beiden Kammerteile auf unterschiedliche Weise erfolgen kann. Auch die Relativlage der Kapsel zum Zeitpunkt der Penetration spielt grundsätzlich keine Rolle.

Weitere Vorteile und Einzelmerkmale der Erfindung ergeben sich aus den nachstehend beschriebenen Ausführungsbeispielen und aus den Zeichnungen. Es zeigen:
- Figur 1:: Einen Querschnitt durch eine erste Ausführungsform einer Kapsel, wobei die Kapsel hinsichtlich der Boden-Wandstärke kein Ausführungsbeispiel der Erfindung gemäß Auspruch 1 ist.
- Figur 2:: eine perspektivische Darstellung der Kapsel gemäss Figur 1 mit Blick auf den Boden,
- Figur 3:: eine perspektivische Darstellung der Kapsel gemäss Figur 1 mit Blick auf die Kapselinnenseite,
- Figur 4:: eine geschnittene, perspektivische Darstellung der Unterseite der Kapsel gemäss Figur 1 bei der Penetration an einem Penetrationsmittel, wobei die Kapsel hinsichtlich der Boden-Wandstärke kein Ausführungsbeispiel der Erfindung gemäß Auspruch 1 ist.
- Figur 5:: eine perspektivische Gesamtdarstellung des Penetrationsmittels gemäss Figur 4,
- Figur 6:: eine perspektivische Darstellung mit Blick ins Innere der Kapsel gemäss Figur 4,
- Figur 7:: eine perspektivische Darstellung mit Blick auf den Boden des Penetrationsmittels gemäss Figur 4,
- Figur 8:: eine Brühvorrichtung für eine Kapsel gemäss Figur 1 vor dem Schliessen der Kavität, wobei die Kapsel hinsichtlich der Boden-Wandstärke kein Ausführungsbeispiel der Erfindung gemäß Auspruch 1 ist.
- Figur 9:: die Vorrichtung gemäss Figur 8 bei geschlossener Kavität, wobei die Kapsel hinsichtlich der Boden-Wandstärke kein Ausführungsbeispiel der Erfindung gemäß Auspruch 1 ist.
- Figur 10:: ein Querschnitt durch eine zweite Ausführungsform einer Kapsel, wobei die Kapsel hinsichtlich der Boden-Wandstärke kein Ausführungsbeispiel der Erfindung gemäß Auspruch 1 ist.
- Figur 11:: eine perspektivische Darstellung der Kapsel gemäss Figur 10 mit Blick auf den Boden,
- Figur 12:: eine perspektivische Darstellung der Kapsel gemäss Figur 10 mit Blick ins Innere der Kapsel,
- Figur 13:: ein Querschnitt durch eine Brühvorrichtung zum Brühen der Kapsel gemäss Figur 10 bei geöffneter Kavität, wobei die Kapsel hinsichtlich der Boden-Wandstärke kein Ausführungsbeispiel der Erfindung gemäß Auspruch 1 ist.
- Figur 14:: die Vorrichtung gemäss Figur 13 bei geschlossener Kavität, wobei die Kapsel hinsichtlich der Boden-Wandstärke kein Ausführungsbeispiel der Erfindung gemäß Auspruch 1 ist.
- Figur 15:: einen Querschnitt durch einen Kapselboden mit kegelstumpfförmiger Versteifungszone,
- Figur 16:: einen Querschnitt durch einen Kapselboden mit zylindrischer und kegelförmiger Versteifungszone und
- Figur 17:: einen Querschnitt durch einen Kapselboden mit kalottenförmiger Versteifungszone.

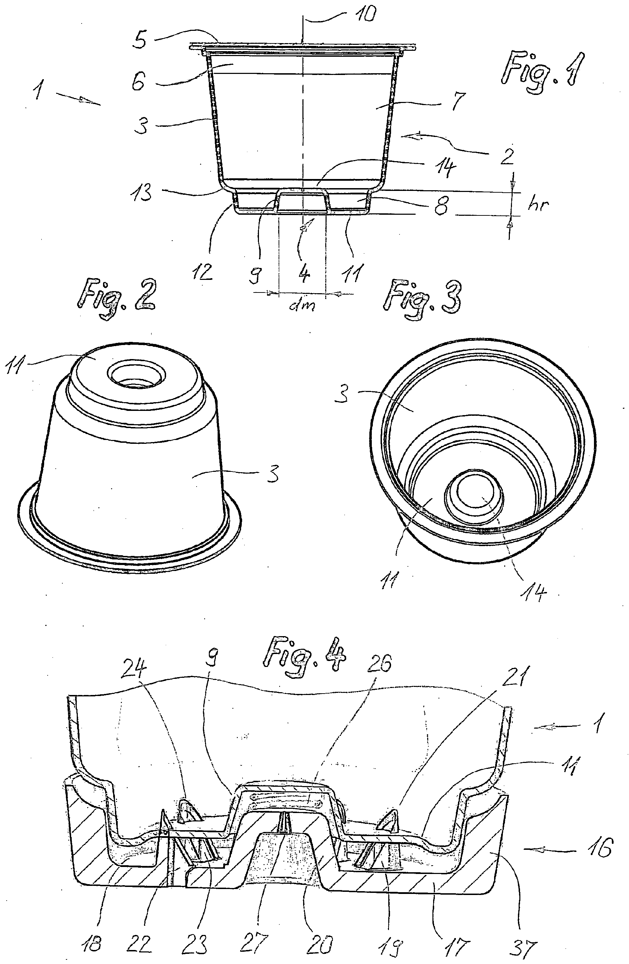

Wie aus den Figuren 1 bis 3 ersichtlich ist, besteht eine insgesamt mit 1 bezeichnete Kapsel aus einem vorzugsweise rotationssymmetrischen Kapselkörper 2, bestehend aus einer Seitenwand 3, welche nahtlos in einen Boden 4 übergeht. Der Kapselkörper 2 kann beispielsweise in einem Tiefziehverfahren oder in einem Spritzgussverfahren hergestellt werden und er besteht vorzugsweise aus einem Kunststoffmaterial wie z.B. Polypropylen. Auch andere Materialen oder Laminate sind ohne weiteres denkbar.

Der topfartige Kapselkörper 2 ist an seinem oberen Ende mit einem Deckel 5 verschlossen, der vorzugsweise ebenfalls aus Kunststoffmaterial besteht und der im Umfangsbereich des Kapselkörpers angeschweisst oder angeklebt wird. Die Kapsel bildet auf diese Weise eine geschlossene, hermetisch dichte Kammer 6, die mit einer Substanz 7 für die Herstellung eines Getränks gefüllt ist. Die Füllung muss nicht zwingend dem maximal möglichen Volumen der Kammer 6 entsprechen. Zum Schutz der Füllung kann die Kammer 6 auch noch mit einem Inertgas gefüllt sein. Bei der Substanz 7 kann es sich beispielsweise um Kaffeepulver oder um Tee handeln, wobei beim Durchströmen der Kapsel mitheissem Wasser ein Extraktionsprozess stattfindet. Bei der Substanz 7 könnte es sich aber beispielsweise auch um einen Trockenextrakt handeln, der beim Durchströmen mit heissem oder mit kaltem Wasser vollständig in Lösung übergeht, so dass zuletzt keine Rückstände in der Kapsel verbleiben. Denkbar wäre z.B. ein Trockenextrakt für die Herstellung eines Fruchtgetränks oder einer Bouillon.

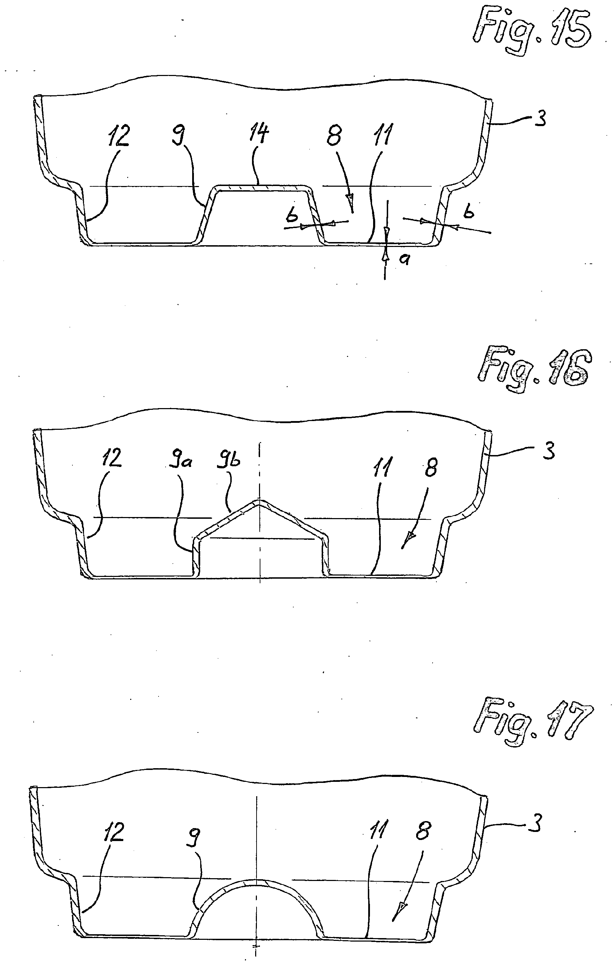

Die Substanz 7 liegt ohne Filterschichten oder dergleichen unmittelbar auf dem Boden 4 des Kapselkörpers 2 auf. Voraussetzung dafür ist die nachstehend noch beschriebene, besondere Art der Penetration des Kapselbodens bzw. die Ausgestaltung des Kapselbodens selbst. Dieser weist eine kreisringförmige Rinne 8 auf, deren innere Wandpartie 9 sich gegen den Deckel hin vorzugsweise kegelstumpfförmig im Durchmesser verjüngt. Die äussere Wandpartie 12 der Rinne 8 erweitert sich vorzugsweise mit der gleichen Winkelneigung relativ zur Längsmittelachse 10 wie die innere Wandpartie 9. Die Höhe hr der Rinne 8 in Richtung der Längsmittelachse 10 ist in jedem Fall kleiner als der mittlere Durchmesser dm der inneren Wandpartie 9 und vorzugsweise auch kleiner als die mittlere Breite der Rinne. Die innere Wandpartie 9 bildet eine Versteifungszone, welche der Penetration am Boden 11 der Rinne einen Widerstand entgegensetzt. Die gleiche Funktion kann auch die äussere Wandpartie 12 ausüben, wobei erfindungsgemäss die Wandstärke der inneren Wandpartie 9 und der äusseren Wandpartie 12 gegenüber dem Boden 11 der Rinne etwas verstärkt ausgebildet ist, wie in Figuren 15 bis 17 gezeigt.

Das deckelseitige obere Ende der inneren Wandpartie 9 geht in einen zentralen Bodenabschnitt 14 über, der parallel zum Boden 11 der Rinneverläuft. Auf der gleichen Ebene des zentralen Bodenabschnitts 14 geht die äussere Wandpartie 12 mit einem Radius 13 in die Seitenwand 3 über. Der Übergang könnte auch mit einem Absatz erfolgen, der im rechten Winkel oder schräg zur Längsmittelachse 10 verläuft.

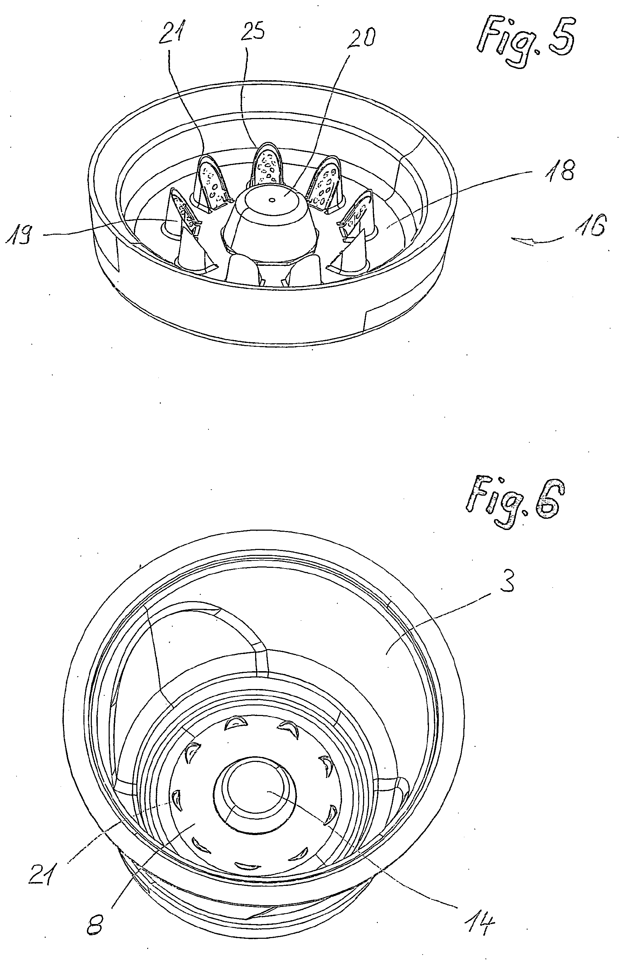

In den Figuren 4 und 5 ist ein Mittel 16 dargestellt, das für die Penetration des Bodens 4 der Kapsel 1 geeignet ist. Dieses Mittel verfügt über eine Bodenplatte 17 mit einer zentralen, vorzugsweise kegelstumpfförmigen Erhöhung 20 und mit einer umlaufenden Aussenwand 37. Auf diese Weise entsteht eine kreisringförmige Wanne oder Penetrationszone 18, in der vorzugsweise kreisförmig mehrere Penetrationselemente 19 angeordnet sind. Diese haben die Form von schräg angeschnittenen Zylindern bzw. Kegeln mit einer gegen den Deckel der Kapsel gerichteten Spitze bzw. Schneide 21. Durch jedes Penetrationselement verläuft ein Ablaufkanal 22, der sich auch durch die Bodenplatte 17 erstreckt. Jeder Ablaufkanal öffnet sich gegen eine Seitenfläche 23 eines Penetrationselements, die unterhalb bzw. innerhalb einer Spitze bzw. Schneide 21 liegt. Wie im Ausführungsbeispiel dargestellt, sind sämtliche Seitenflächen 23 dem Zentrum bzw. der Erhöhung 20 zugewandt.

Zum Erzielen einer Filterwirkung sind die Öffnungen 24 in den Seitenflächen 23 mit einer Siebfolie 25 (Fig. 5) abgedeckt. Derartige Folien werden auch als Mikrosiebfolien bezeichnet, wobei die Feinheit der Öffnungen je nach der gewünschten Filterwirkung beliebig gewählt werden kann. Die Folienabschnitte können durch Schweissen auf den Seitenflächen 23 befestigt werden.

Wie aus Figur 4 ersichtlich ist, kann auf der zentralen Erhöhung 20 noch eine Schraubendruckfeder 26 befestigt sein, welche beim Penetrationsprozess auf Block zusammengepresst wird und welche das nachträgliche Ablösen der Kapsel erleichtert. Im Zentrum der Erhöhung 20 kann ausserdem eine durchgehende Öffnung 27 angeordnetsein, welche verhindert, dass sich über der Erhöhung 20 ein Luftpolster aufbauen kann.

Figur 6 zeigt die gleiche Situation beim Penetrieren des Kapselbodens wie Figur 4, d.h. unmittelbar nachdem die Spitzen der Penetrationselemente 19 den Boden 11 der Rinne in der Kapsel durchstossen haben, jedoch noch nicht der gesamte Querschnitt der Öffnungen 24 freigelegt ist. Wie insbesondere aus Figur 4 ersichtlich ist, kann der Boden 11 der Rinne beim Penetrationsvorgang gegenüber der unbelasteten Lage (Fig. 1) etwas angehoben werden. Der Boden 11 verbleibt jedoch infolge der Versteifung durch die innere Wandpartie 9 planparallel, womit der Penetration ein hoher Widerstand entgegengesetzt wird. Die für die Penetration erforderliche Reissspannung wird dabei sofort erreicht und der Boden 11 erleidet keine unzulässige Durchbiegung.

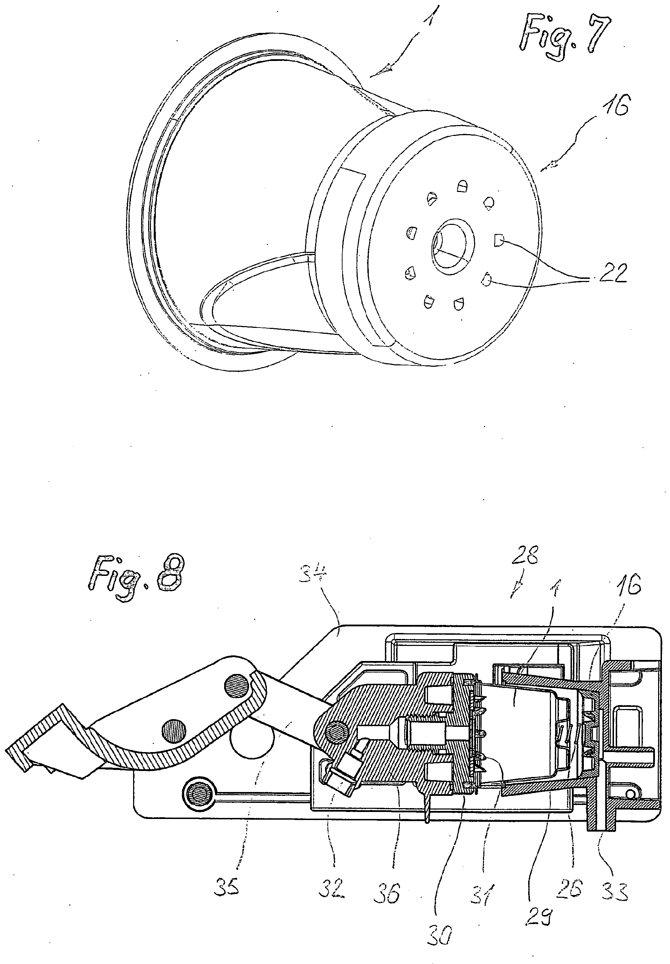

Sobald der Druckaufbau in der Kapsel einsetzt, wird der Boden der Kapsel formschlüssig und druckdicht gegen die Bodenplatte 17 gepresst und damit der maximale Abflussquerschnitt an den Öffnungen 24 erreicht. Der Extrakt fliesst danach durch die Ablaufkanäle 22 (Fig. 7), wo er auf geeignete Weise aufgefangen und weggeleitet werden kann.

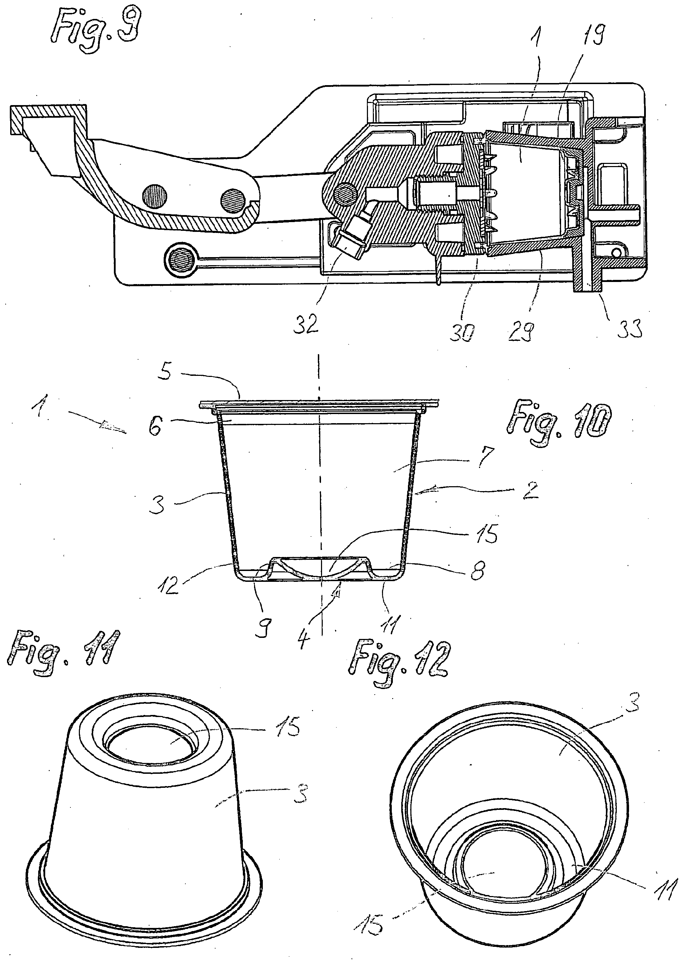

Die Figuren 8 und 9 zeigen einen Querschnitt durch ein Brühmodul einer Kaffeemaschine für eine Kapsel gemäss Figur 1 und unter Verwendung eines Penetrationsmittels 16 gemäss Figur 5. Die wesentlichen Elemente dieser Vorrichtung 28 bestehen aus einem Kapselhalter 29, in dessen Boden das beschriebene Penetrationsmittel 16 eingebaut ist. Der Kapselhalter kann mit einem Verschlussteil 30 zu einer Brühkammer abgeschlossen bzw. abgedichtet werden. Das Verschlussteil ist seinerseits mit einer Mehrzahl von Penetrationselementen 31 versehen, welche ähnlich ausgebildet und angeordnet sein können, wie diejenigen am Penetrationsmittel 16. Das Verschlussteil 30 ist auf einer Halterung 36 befestigt, welche in einem Gestell 34 mit Hilfe einer Hebelmechanik 35 linear gegen den Kapselhalter 29 bzw. von diesem weg bewegt werden kann.

Bei vollständig geschlossener Brühkammer gemäss Figur 9 ist die Kapsel 1 an ihrem Deckel und an ihrem Boden penetriert. Über eine hier nicht dargestellte Pumpe wird Brühwasser über einen Einlauf 32 eingeleitet bzw. durch die Kapsel vom Deckel gegen den Boden durchgeleitet. Der Extrakt, also beispielsweise der fertige Kaffe fliesst über einen Ablauf 33 ab.

Beim Ausführungsbeispiel gemäss den Figuren 10 bis 12 unterscheidet sich die Kapsel 1 insofern von derjenigen gemäss Figur 1, als dass die innere Wandpartie 9 der kreisringförmigen Rinne 8 an ihrem deckelseitigen Ende in einen konvex gewölbten zentralen Bodenabschnitt übergeht. Ausserdem geht die äussere Wandpartie 12 der Rinne 8 nahtlos und ohne Durchmesserveränderung direkt in die Seitenwand 3 über. Die zentrale Wandpartie 15 ist derart ausgebildet, dass sie durch eine Kraft von aussen gegen den Deckel 5 gestülpt werden kann, wodurch sich ersichtlicherweise das Volumen der Kammer 6 etwas reduziert.

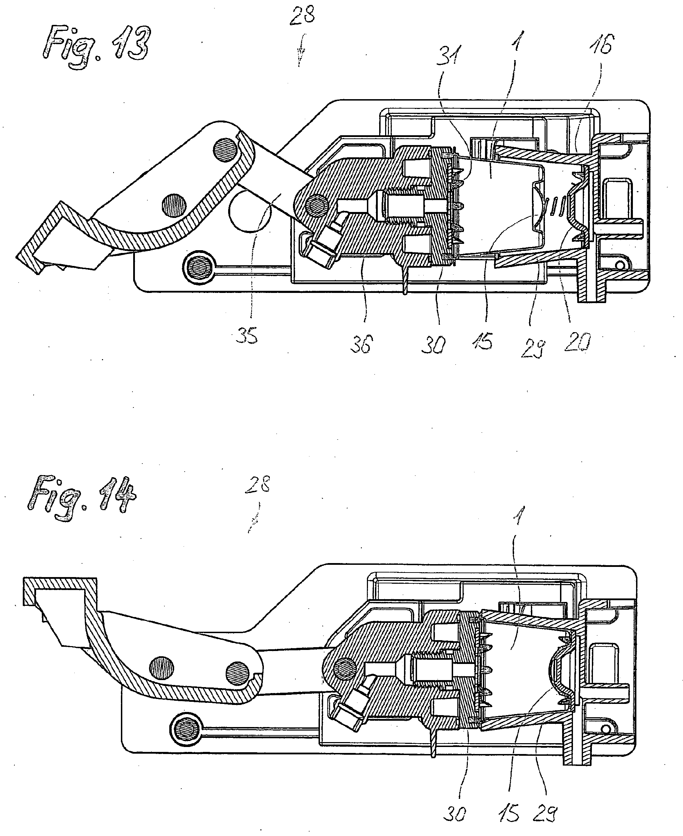

Dieser Vorgang ist in der Vorrichtung 28 gemäss den Figuren 13 und 14 dargestellt. Beim Schliessen der Brühkammer durch das Zusammenführen des Kapselhalters 29 und des Verschlussteils 30 ist der zentrale Bodenabschnitt 15 noch konvex nach aussen gewölbt. Die Schraubendruckfeder 26 liegt jedoch bereits an diesem Bodenabschnitt an und übt eine ansteigende Kraft auf ihn aus. Die Erhöhung 20 im Penetrationsmittel 16 ist hier übrigens nicht kegelstumpfförmig, sondern kalottenartig ausgebildet.

Noch vor Erreichen der Schliessstellung gemäss Figur 14 wird der zentrale Bodenabschnitt 15 konkav nach innen gegen den Deckel der Kapsel umgestülpt, wodurch eine leichte Kompression des Kapselinhalts bewirkt wird. Damit kann eine Verdichtung des Kaffeepulvers und dadurch eine verbesserte Extraktion erzielt werden.

Figur 15 zeigt nochmals einen Querschnitt durch einen Kapselboden, wobei die Versteifungszone gleich wie bei Figur 4 kegelstumpfförmig ausgebildet ist. Die innere Wandpartie 9 der kreisringförmigen Rinne 8 verjüngt sich somit unter einem bestimmten Winkel gegen den Deckel hin. Der dabei verbleibende zentrale Bodenabschnitt 14 verläuft planparallel zum Boden 11 der Rinne. Deutlich sichtbar ist hier die Differenz zwischen der Wandstärke a am Boden 11 der Rinne und der Wandstärke b an der inneren Wandpartie 9 bzw. an der äusseren Wandpartie 12. Damit ist eine möglichst leichte Penetration am Boden gewährleistet.

Beim Ausführungsbeispiel gemäss Figur 16 bildet die Versteifungszone einen zylindrischen Körper, der sich gegen den Deckel hin kegelförmig verjüngt. Die innere Wandpartie der Rinne 8 ist damit ersichtlicherweise zusammengesetzt aus einem zylindrischen Abschnitt 9a und einem kegelförmigen Abschnitt 9b.

Beim Ausführungsbeispiel gemäss Figur 17 ist die Versteifungszone kalottenförmig ausgebildet, wobei es sich im vorliegenden Fall um eine Kugelkalotte handelt. Die innere Wandpartie 9 bildet dabei ersichtlicherweise einen Kugelabschnitt.

Selbstverständlich sind alternative Ausführungsformen zur Bildung der zentralen Versteifungszone denkbar. Insbesondere könnte die innere Wandpartie unterschiedliche Neigungswinkel, Krümmungen oder Wandstärken haben. Bei Kapselkörpern, welche in einem Spritzgiessverfahren hergestellt werden, wäre es ausserdem denkbar, die Versteifungszone im Zentrum der kreisringförmigen Rinne durch zusätzliche Wandabschnitte wie z.B. durch sternförmige Lamellen auszusteifen. Das Mittel zum Penetrieren des Bodens der Kapsel ist jeweils im Zentrum der kreisringförmigen Penetrationszone der Konfiguration der Versteifungszone angepasst, um eine optimale Zentrierung zu gewährleisten.

## Patentansprüche

1. Kapsel (1), bestehend aus einem vorzugsweise rotationssymmetrisch ausgebildeten Kapselkörper (2) mit einer Seitenwand (3) und mit einem einstückig mit dieser ausgebildeten Boden (4), sowie mit einem den Kapselkörper abdeckenden Deckel (5) zur Bildung einer geschlossenen Kammer (6), welche eine Substanz (7) für die Zubereitung eines Getränks enthält, wobei der Deckel und der Boden für die Durchleitung einer Flüssigkeit durch die Kammer vom Deckel gegen den Boden mit ausserhalb der Kapsel angeordneten Mitteln (16, 31) penetrierbar sind, wobei die Substanz (7) unmittelbar auf dem Boden (4) der Kapsel aufliegt, wobei der Boden eine kreisringförmige Rinne (8) mit einer äusseren Wandpartie (12) und einer inneren Wandpartie (9) aufweist, deren innere Wandpartie (9) eine hohle, vorzugsweise sich gegen den Deckel verjüngende, vorzugsweise kegelstumpfförmige Versteifungszone bildet, in welche eine den ausserhalb der Kapsel angeordneten Mitteln zugeordnete Erhöhung (20) zum Zentrieren der Kapsel während der Penetration eindringen kann, **dadurch gekennzeichnet, dass** der Boden (11) der Rinne die penetrierbare Zone bildet, und die Wandstärke des Bodens (4) im Bereich der penetrierbaren Zone (11) geringer ist als an der inneren und/oder an der äusseren Wandpartie (9, 12).

2. Kapsel nach Anspruch 1, **dadurch gekennzeichnet dass** die Höhe der inneren Wandpartie, bezogen auf die Längsmittelachse (10) der Kapsel kleiner ist als der mittlere Durchmesser (dm) der inneren Wandpartie.

3. Kapsel nach Anspruch 1 oder 2, **dadurch gekennzeichnet, dass** die äussere Wandpartie (12) der Rinne (8) sich gegen den Deckel vorzugsweise kegelstumpfförmig erweitert und direkt in die Seitenwand (3) übergeht.

4. Kapsel nach Anspruch 1 oder 2, **dadurch gekennzeichnet, dass** die äussere Wandpartie (12) der Rinne (8) sich gegen den Deckel vorzugsweise kegelstumpfartig erweitert und mit einem Absatz oder mit einem Radius in die Seitenwand (3) übergeht.

5. Kapsel nach Anspruch 4, **dadurch gekennzeichnet, dass** die innere Wandpartie (9) der Rinne (8) bis in die Ebene des Absatzes oder des Radiusansatzes zwischen der äusseren Wandpartie (12) und der Seitenwand (3) reicht.

6. Kapsel nach einem der Ansprüche 1 bis 5, **dadurch gekennzeichnet, dass** die innere Wandpartie (9) an ihrem deckelseitigen Ende in einen zentralen Bodenabschnitt (14) übergeht, der parallel zum Boden (11) der Rinne verläuft.

7. Kapsel nach Anspruch 4 und Anspruch 6, **dadurch gekennzeichnet, dass** der zentrale Bodenabschnitt (14) in der Ebene des Absatzes oder des Radiusansatzes zwischen der äusseren Wandpartie (12) und der Seitenwand (3) verläuft.

8. Kapsel nach einem der Ansprüche 1 bis 5, **dadurch gekennzeichnet, dass** die innere Wandpartie (9) an ihrem deckelseitigen Ende in einen konkav nach innen gewölbten zentralen Bodenabschnitt übergeht.

9. Kapsel nach einem der Ansprüche 1 bis 5, **dadurch gekennzeichnet, dass** die innere Wandpartie (9) an ihrem deckelseitigen Ende in einen konvex nach aussen gewölbten zentralen Bodenabschnitt (15) übergeht.

10. Kapsel nach Anspruch 9, **dadurch gekennzeichnet, dass** der zentrale Bodenabschnitt (15) derart flexibel ausgestattet ist, dass er durch eine Kraft von aussen konkav nach innen stülpbar ist.

11. Mittel (16) zum Penetrieren des Bodens (4) einer Kapsel (1) nach einem der Ansprüche 1 bis 10, mit einer Bodenplatte (17), die eine kreisringförmige Penetrationszone (18) aufweist, auf der mehrere Penetrationselemente (19) angeordnet sind, wobei im Zentrum der Penetrationszone eine vorzugsweise kegelstumpfförmige Erhöhung (20) angeordnet ist, die zum Eindringen in die hohle, vorzugsweise kegelstumpfförmige Zone der Kapsel (1) vorgesehen ist.

12. Mittel nach Anspruch 11, **dadurch gekennzeichnet, dass** die Penetrationszone (18) eine kreisringförmige Wanne bildet.

13. Mittel nach Anspruch 11 oder 12, **dadurch gekennzeichnet, dass** die Penetrationselemente (19) sich zu einer Spitze oder zu einer Schneide (21) verjüngende Körper mit einem Ablaufkanal (22) bilden, der sich durch die Bodenplatte (17) erstreckt und gegen eine Seitenfläche (23) des Körpers öffnet.

14. Mittel nach Anspruch 13, **dadurch gekennzeichnet, dass** die Öffnungen (24) in den Seitenflächen der Körper mit einer Siebfolie (25) bedeckt sind.

15. Mittel nach Anspruch 13 oder 14, **dadurch gekennzeichnet, dass** die Öffnungen des Ablaufkanals jeweils in einer Seitenfläche angeordnet sind, welche der zentralen Erhöhung zugewandt ist.

16. Mittel nach einem der Ansprüche 11 bis 15, **dadurch gekennzeichnet, dass** die Penetrationselemente (19) etwa gleich hoch sind wie die vorzugsweise kegelstumpfförmige Erhöhung im Zentrum.

17. Mittel nach einem der Ansprüche 11 bis 16, **dadurch gekennzeichnet, dass** auf der kegelstumpfförmigen Erhöhung eine Schraubendruckfeder (26) angeordnet ist, deren freies Ende an den Boden einer gegen die Bodenplatte pressbaren Kapsel anlegbar ist.

18. Vorrichtung für die Zubereitung eines Getränks unter Verwendung einer Kapsel (1) nach einem der Ansprüche 1 bis 10, mit zwei zur Bildung einer geschlossenen Kammer gegeneinander pressbaren Kammerteilen, wobei ein Kammerteil als Kapselhalter (29) mit einer Kavität zur Aufnahme einer Kapsel und das andere Kammerteil als Verschlussteil (30) zum Verschliessen der Kavität ausgebildet ist und wobei der Boden der Kavität ein Mittel (16) gemäss einem der Ansprüche 11 bis 17 aufweist und das Verschlussteil ebenfalls mit Penetrationsmitteln (31) versehen ist, derart, dass bei geschlossener Kavität eine darin angeordnete Kapsel am Boden und am Deckel zum Durchleiten einer Flüssigkeit penetrierbar ist.

## Claims

1. Capsule (1) consisting of a preferably rotationally symmetrically formed capsule body (2) having a side wall (3) and having a base (4) formed integrally therewith, and having a lid (5) which covers the capsule body and is intended for forming a closed chamber (6), which contains a substance (7) for preparing a beverage, it being possible for the lid and the base to be pierced by means (16, 31) arranged outside the capsule in order for a liquid to be channelled through the chamber from the lid towards the base, wherein the substance (7) rests directly on the base (4) of the capsule, and wherein the base has an annular channel (8) with and outer wall portion (12) and an inner wall portion (9), whose inner wall portion (9) forms a hollow, preferably frustoconical stiffening zone which tapers preferably towards the lid, in which an elevation (20), associated with means arranged externally to the capsule, for centering the capsule during the piercing can enter, **characterized in that** the base (11) of the channel forms the penetration zone and that the wall thickness of the base (4) in the region of the penetratable zone (11) is smaller than at the inner and/or the outer wall portion (9, 12).

2. Capsule according to Claim 1, **characterized in that** the height of the inner wall portion, referring to the longitudinal centre axis (10) of the capsule, is smaller than the average diameter (dm) of the inner wall portion.

3. Capsule according to Claim 1 or 2, **characterized in that** the outer wall portion (12) of the channel (8) widens preferably frustoconically towards the lid and merges directly into the side wall (3).

4. Capsule according to Claim 1 or 2, **characterized in that** the outer wall portion (12) of the channel (8) widens preferably frustoconically towards the lid and merges into the side wall (3) by way of a shoulder or by way of a radius.

5. Capsule according to Claim 4, **characterized in that** the inner wall portion (9) of the channel (8) extends into the plane of the shoulder or of the beginning of the radius between the outer wall portion (12) and the side wall (3).

6. Capsule according to one of Claims 1 to 5, **characterized in that**, at its lid end, the inner wall portion (9) merges into a central base section (14) which runs parallel to the base (11) of the channel.

7. Capsule according to Claim 4 and Claim 6, **characterized in that** the central base section (14) runs in the plane of the shoulder or of the beginning of the radius between the outer wall portion (12) and the side wall (3).

8. Capsule according to one of Claims 1 to 5, **characterized in that**, at its lid end, the inner wall portion (9) merges into a concavely inwardly curved central base section.

9. Capsule according to one of Claims 1 to 5, **characterized in that**, at its lid end, the inner wall portion (9) merges into a convexly outwardly curved central base section (15).

10. Capsule according to Claim 9, **characterized in that** the central base section (15) is configured in a flexible manner such that it can be pushed concavely inwards by a force exerted from the outside.

11. Means (16) for penetrating the base (4) of a capsule (1) according to one of Claims 1 to 10, having a base plate (17) with an annular piercing zone (18) on which a plurality of piercing elements (19) are arranged, a preferably frustoconical elevation (20) being arranged in the centre of the piercing zone, which is provided for entering the hollow, preferably frustoconical zone of the capsule (1).

12. Means according to Claim 11, **characterized in that** the piercing zone (18) forms an annular trough.

13. Means according to Claim 11 or 12, **characterized in that** the piercing elements (19) form bodies which taper to a tip or to a cutting edge (21) and have an outflow channel (22) which extends through the base plate (17) and opens out towards one side surface (23) of the body.

14. Means according to Claim 13, **characterized in that** the openings (24) in the side surfaces of the bodies are covered by a straining film (25).

15. Means according to Claim 13 or 14, **characterized in that** the openings of the outflow channel are each arranged in a side surface, which is directed towards the central elevation.

16. Means according to one of Claims 11 to 15, **characterized in that** the piercing elements (19) are approximately of the same height as the preferably frustoconical elevation in the centre.

17. Means according to one of Claims 11 to 16, **characterized in that** a helical compression spring (26) is arranged on the frustoconical elevation, the free end of which can be positioned on the base of a capsule which can be pressed against the base plate.

18. Device for preparing a beverage using a capsule (1) according to one of Claims 1 to 10, having two chamber parts which can be pressed against one another in order to form a closed chamber, one chamber part being designed as a capsule holder (29) with a cavity for accommodating a capsule and the other chamber part being designed as a closure part (30) for closing the cavity, and the base of the cavity having a means (16) according to one of Claims 11 to 17, and the closure part being likewise provided with piercing means (31) such that, when the cavity is closed, a capsule arranged therein can have its base and lid penetrated in order for a liquid to be channelled through.

## Revendications

1. Capsule (1) composée d'un corps (2) de préférence réalisé avec une symétrie de rotation, corps comportant une paroi latérale (3) et un fond (4) réalisé d'un seul tenant avec celle-ci et comportant un couvercle (5) recouvrant le corps pour former une chambre fermée (6), laquelle contient une substance (7) destinée à la préparation d'une boisson, le couvercle et le fond pouvant être transpercés, pour le transfert d'un liquide à travers la chambre, du couvercle vers le fond, par des moyens (16, 31) disposés à l'extérieur de la capsule, la substance (7) reposant directement sur le fond (4) de la capsule, le fond présentant une rigole circulaire (8) avec une partie de paroi externe (12) et une partie de paroi interne (9), rigole dont la partie de paroi interne (9) forme une zone de renforcement creuse, s'amincissant de préférence en direction du couvercle, de préférence de forme tronconique, zone dans laquelle peut pénétrer une saillie (20), associée aux moyens disposés à l'extérieur de la capsule, pour centrer la capsule pendant la perforation, la capsule étant **caractérisée en ce que** le fond (11) de le rigole forme la zone pouvant être transpercée et l'épaisseur du fond (4) est plus faible au niveau de la zone pouvant être transpercée (11) que sur la partie de paroi (9, 12) interne et/ou externe.

2. Capsule selon la revendication 1, **caractérisée en ce que** la hauteur de la partie de paroi interne, rapportée à l'axe central longitudinal (10) de la capsule, est inférieure au diamètre central (dm) de la partie de paroi interne.

3. Capsule selon la revendication 1 ou 2, **caractérisée en ce que** la partie de paroi externe (12) de la rigole (8) s'élargit de préférence de manière tronconique en direction du couvercle et rejoint directement la paroi latérale (3),

4. Capsule selon la revendication 1 ou 2, **caractérisée en ce que** la partie de paroi externe (12) de la rigole (8) s'élargit de préférence de manière tronconique en direction du couvercle et rejoint la paroi latérale (3) par l'intermédiaire d'un talon ou d'un rayon.

5. Capsule selon la revendication 4, **caractérisée en ce que** la partie de paroi interne (9) de la rigole (8) s'étend jusqu'au plan du talon ou au bord du rayon, entre la partie de paroi externe (12) et la paroi latérale (3).

6. Capsule selon l'une quelconque des revendications 1 à 5, **caractérisée en ce que** la partie de paroi interne (9) rejoint, au niveau de son extrémité située côté couvercle, une section centrale du fond (14) qui est parallèle au fond (11) de la rigole.

7. Capsule selon la revendication 4 et la revendication 6, **caractérisée en ce que** la section centrale du fond (14) s'étend sur le plan du talon ou du bord du rayon, entre la partie de paroi externe (12) et la paroi latérale (3).

8. Capsule selon l'une quelconque des revendications 1 à 5, **caractérisée en ce que** la partie de paroi interne (9) rejoint, au niveau de son extrémité située côté couvercle, une section centrale du fond voûtée vers l'intérieur, de manière concave.

9. Capsule selon l'une quelconque des revendications 1 à 5, **caractérisée en ce que** la partie de paroi interne (9) rejoint, au niveau de son extrémité située côté couvercle, une section centrale du fond (15) voûtée vers l'extérieur, de manière convexe.

10. Capsule selon la revendication 9, **caractérisée en ce que** la section centrale du fond (15) est réalisée de manière si souple qu'elle peut être retournée, au moyen d'une force, de l'extérieur vers l'intérieur, de manière à devenir concave.

11. Moyen (16) pour transpercer le fond (4) d'une capsule (1) selon l'une quelconque des revendications 1 à 10, comportant une plaque de fond (17) qui présente une zone de perforation circulaire (19) sur laquelle sont disposés plusieurs éléments de perforation (19), et au centre de laquelle on a réalisé une saillie (20) de préférence tronconique qui est prevue pour transpercer la zone de la capsule (1) creuse, de préférence tronconique.

12. Moyen selon la revendication 11, **caractérisé en ce que** la zone de perforation (18) forme une cuvette circulaire.

13. Moyen selon la revendication 11 ou 12, **caractérisé en ce que** les éléments de perforation (19) forment des corps munis d'un canal d'écoulement (22), corps se rétrécissant en pointe ou en arête (21), le canal s'étendant à travers la plaque de fond (17) et s'ouvre en direction d'une surface latérale (23) du corps.

14. Moyen selon la revendication 13, **caractérisé en ce que** les ouvertures (24) sont recouvertes d'une feuille perforée (25) dans les surfaces latérales des corps.

15. Moyen selon la revendication 13 ou 14, **caractérisé en ce que** les orifices du canal d'écoulement sont chacun disposés dans une surface latérale qui est tournée en direction de la saillie centrale.

16. Moyen selon l'une quelconque des revendications 11 à 15, **caractérisé en ce que** les éléments de perforation (19) sont à peu près de la même hauteur que la saillie de préférence tronconique, située au centre.

17. Moyen selon l'une quelconque des revendications 11 à 16, **caractérisé en ce qu'**on a disposé un ressort de pression (26) sur la saillie tronconique, ressort dont l'extrémité libre peut être placée sur le fond d'une capsule pouvant être pressée contre la plaque de fond.

18. Dispositif pour la préparation d'une boisson en utilisant une capsule (1) selon l'une quelconque des revendications 1 à 10, comportant deux parties de chambre pouvant être pressées l'une contre l'autre pour former une chambre fermée, une partie de chambre étant réalisée sous forme de support de capsule (29) muni d'une cavité pour recevoir une capsule et l'autre partie de chambre étant réalisée sous forme de pièce d'obturation (30) pour obturer la cavité, le fond de la cavité présentant un moyen (16) selon l'une quelconque des revendications 11 à 17 et la partie d'obturation est également munie de moyens de perforation (31) de telle sorte que, lorsque la cavité est fermée, une capsule se trouvant à l'intérieur de celle-ci puisse être perforée au niveau du fond et du couvercle pour permettre le transfert d'un liquide.
